# EUROPEAN PATENT APPLICATION

(11) **EP 4 276 157 A1**
(43) Date of publication of application: **15.11.2023**
(21) Application number: 22173391.8
(22) Date of filing: 13.05.2022
(51) Int. Cl.: C09J 7/30, E04B 1/62, C08J 9/36, C09D 175/00

(54) **REMOVABLY ADHERENT INSULATION MATERIAL AND METHOD FOR THE PRODUCTION THEREOF**

(71) Applicant: PLIXXENT Holding GmbH, 22761 Hamburg (DE)
(72) Inventor: REEZIGT, Herman, 8072 HJ Nunspeel (NL); DAVIDSON, Blaise, 9642 BR Veendam (NL)
(74) Representative: Habermann, Hruschka & Schnabel

(57) **Abstract**

The present invention relates to insulation composite materials comprising an insulation layer and a release layer wherein the release layer adheres to the insulation layer and provides for removable attachment of the composite layer insulation material or the insulation layer, respectively, to a substrate material. The invention also relates to a method for preparing the insulation composite materials of the invention on a substrate, preferably a construction material.

## Description

The present invention relates to insulation composite materials comprising an insulation layer and a release layer wherein the release layer adheres to the insulation layer and provides for removable attachment of the composite layer insulation material or the insulation layer, respectively, to a substrate material. The invention also relates to a method for preparing the insulation composite materials of the invention on a substrate, preferably a construction material.

Insulation materials for facade insulation are known in the art. Particularly useful insulation materials for building applications are polyurethane foams, in particular polyurethane rigid (hard) foams, typically for application on e.g., floors, crawl spaces and roofs. In preparing the polyurethane insulation it is typically applied *in situ* by pouring or spraying. Upon contact with the substrate such as wood or concrete, the insulation material adheres essentially irreversibly to the substrate. It has hitherto been the object of the prior art to even improve the strength of adherence of the insulation to the substrate.

Sustainability has become a more and more important aspect in all parts of production industry, including the formation and potential recycling of buildings, parts thereof and building materials. An important condition for a sustained, circular building and construction economy is that materials can be separated essentially completely after the end of a building's life cycle and during the demolition of a building.

However, the hitherto developed insulation materials, in particular polyurethane foam insulations, pose a severe problem to the requirement of 100 % separation of building materials, since it is not easy and sometimes even impossible to loosen the insulation material from the substrate.

There is a tremendous need for improved insulation materials which enable convenient separation from substrates, in particular buildings and parts thereof when the life cycle of the building has ended.

The technical problem underlying the present invention is the provision of easily removable insulation materials for substrates, in particular for buildings and parts thereof.

The solution of the technical problem is provided by the embodiments of the present invention as disclosed and defined in the claims, the present description and the appended drawings.

In particular, the present invention provides an insulation composite material, preferably acting as a thermal insulation material, comprising an insulation layer and a release layer wherein the release layer adheres to the insulation layer and provides for removable attachment of at least the insulation layer of the composite layer insulation material when said material is attached to a substrate material. In certain instances of the present invention, the release layer is also denoted synonymously as "intermediate layer", since in application of the insulation composite material the release layer adopts and intermediate position between the substrate and the insulation layer.

In one embodiment, the release layer adheres permanently to the insulation layer wherein in this embodiment, the release layer is removably adherent to a substrate. In an alternative embodiment the release layer is removably adherent to the insulation layer wherein in this embodiment the release layer preferably adheres permanently to a substrate.

The preferred insulation layers of the invention at least comprise or essentially consist of or consist of, respectively, polyurethane foams, more preferably hard (rigid) polyurethane foams. Polyurethanes are particularly preferred because of their high thermal insulation properties (very low thermal conductivity), and further beneficial properties such as, amongst others, mechanical and chemical stability. Useful and preferred, respectively, polyurethanes for use as insulation layer of the invention are commercially available. Further preferred insulation layer materials for use in the invention include, but are not limited to, stone wool, glass wool, resol rigid foam, phenolic foam, polyisocyanurate (PIR), extruded polystyrene (EPS), expanded polystyrene (XPS), ureum formaldehyde foam, cellulose fiberboard, hemp fiberboard, wood fiberboard and flax wool.

The release layer according to the invention is provided on one surface of the insulation layer, which surface faces the substrate when the composite material is applied thereon. In certain embodiments of the invention the release layer is preferably permanently attached (permanently adherent) to the insulation layer. In other embodiments of the invention, the release layer is removably attached (removably adherent) to the insulation material. In application of the insulation composite material according to the invention, the release layer is in contact with the substrate. In preferred embodiments of the invention the release layer is configured such that it provides for removable attachment of the composite from the substrate, wherein in this type of embodiment the release layer typically is permanently attached to the insulation layer. In other embodiments the release layer is configured such that it provides for removable attachment of the insulation layer from the substrate wherein the release layer typically is removably attached to the insulation layer, i.e. upon stripping of the insulation layer the release layer remains at least essentially completely or completely, respectively, on the substrate whereas the insulation layer is stripped completely or essentially completely, respectively, from the release layer.

In one embodiment, the release layer is a coating at least partially, preferably essentially covering the surface of the insulation layer facing the substrate surface.

Preferred release layers of the invention comprise at least one polymeric material, typically a film forming material, more preferably a polymeric resin material. Preferred polymers contained in the release layer include, but are not limited to, polyurethanes, polyvinyl alcohol, polyvinyl acetates, polyvinyl formal, polyvinyl butyral, polyvinyl chloride, polyvinyl acetate copolymers, polyvinylidene copolymers and polyvinylidene chloride-vinyl chloride copolymers and mixtures of two or more thereof.

The polymers present in the release layer, preferably such as those mentioned above, may serve, besides having film forming properties, additional functions in release layers of the invention. For example, one or more polymeric materials such as one or more of the above polymers may serve as binders for resin materials present in the release layer.

As described in more detail below, the release layer is according to certain embodiments of the invention prepared from coating compositions further comprising liquid base components, preferably water or aqueous media, in addition to the polymeric material(s). Release layers made from such coating compositions or release layers of other embodiments may contain, depending on various factors such as the polymeric material(s) and other ingredients or properties, different amounts of water. In other embodiments, the release layer essentially contains no water.

The release layer may include further ingredients such as one or more release agents, one or more wetting agents, one or more defoamers, one or more plasticizers and/or one or more coalescents.

In one preferred embodiment of the invention, the release layer comprises a resin component such as preferably a polyurethane, and at least one binder. Preferably, the polyurethane is a polyurethane powder, more preferably a polyurethane waste powder, the waste powder preferably being obtained from a polyurethane foam waste material. Preferred binders for use in this embodiment of the present invention include, but are not limited to, polyvinyl alcohol, polyvinyl acetates, polyvinyl formal, polyvinyl butyral, polyvinyl chloride, polyvinyl acetate copolymers, polyvinylidene copolymers and polyvinylidene chloride-vinyl chloride copolymers and mixtures of two or more thereof. In this embodiment of the invention, the release layer may comprise a mixture of two or more binders such as the above-indicated binders. In one embodiment the binder mixture contains at least a polyvinyl alcohol binder. In certain embodiments of polyvinyl alcohol is used as the single binder component in the release layer.

A preferred example of a release layer according to the preceding paragraph comprises the resin component, preferably a polyurethane, more preferably a polyurethane powder, most preferred a polyurethane waste powder, and at least one binder, preferably selected from the binder materials as disclosed above, more preferably polyvinyl alcohol or a binder mixture comprising polyvinyl alcohol, in a weight ratio of about 2.5:1 to about 10:1. In certain preferred embodiments, the release layer may contain, based on the total weight of the release layer, about 71.4 % by weight to about 90,9 % by weight of resin component, preferably a polyurethane, more preferably a polyurethane powder, most preferred a polyurethane waste powder, and from about 9.1 % to about 28.6 % by weight of at least one binder, preferably selected from the binder materials as disclosed above, more preferably polyvinyl alcohol or a binder mixture comprising polyvinyl alcohol. In a preferred embodiment of this type, the release layer contains, based on the total weight of the release layer, about 71.4 % by weight of resin component, preferably a polyurethane, more preferably a polyurethane powder, most preferred a polyurethane waste powder, and about 28.6 % by weight of at least one binder, preferably selected from the binder materials as disclosed above, more preferably polyvinyl alcohol or a binder mixture comprising polyvinyl alcohol.

In other preferred embodiments of the invention, the release layer comprises, based on the total weight of the release layer, about 68.2 % by weight to about 91,8 % by weight resin component, about 7.4 % by weight to about 26.6 % by weight of one or more release agents, about 0.11 % by weight to about 1.7 % by weight of one or more wetting agents, about 0.11 % by weight to about 1.7 % by weight of one or more defoamers and about 0.11 % by weight to about 5.0 % by weight of one or more plasticizers and/or one or more coalescents.

Preferred release layers of the above embodiments are typically prepared by forming a coating composition, applying the coating composition on at least a part of the substrate followed by curing the coating composition. It is also possible to apply ready-for-use coating compositions followed by the curing step. The curing step typically is carried out by drying, preferably air drying, which is typically performed by resting of the applied coating composition at ambient temperature. The coating composition is preferably applied by spray coating. It is also possible to apply the coating composition by pouring.

The coating composition preferably comprises a coating component including at least one polymeric material, preferably one or more of the polymeric materials as outlined above. In preferred embodiments of the invention, the coating composition also comprises a liquid base material. In preferred embodiments, the base material comprises or essentially consists or consists of water or an aqueous composition being in the form of an aqueous solution or dispersion or suspension. The base material or composition respectively may comprise further ingredients such as certain volatile components.

As disclosed above, the coating composition may include further ingredients such as one or more release agents and/or one or more wetting agents and/or one or more defoamers and/or one or more plasticizers and/or one or more coalescents.

In one preferred embodiment of the invention, the coating composition for the release layer comprises a polyurethane powder, preferably a polyurethane waste powder, preferably being obtained from a polyurethane foam waste material. In this embodiment, the release layer further contains at least one further polymeric material preferably acting as a binder. Preferred binders for use in this embodiment of the present invention include, but are not limited to, polyvinyl alcohol, polyvinyl acetates, polyvinyl formal, polyvinyl butyral, polyvinyl chloride, polyvinyl acetate copolymers, polyvinylidene copolymers and polyvinylidene chloride-vinyl chloride copolymers and mixtures of two or more thereof. In this embodiment of the invention, the coating composition for the release layer may comprise a mixture of two or more binders such as the above-indicated binders. In one embodiment the binder mixture contains at least a polyvinyl alcohol binder. Preferably, the release layer containing a polyurethane/binder mixture further comprises water. In preferred embodiments a release layer of the invention is formed by use of a coating composition comprising, in relation to the complete weight of the coating composition, about 5 % by weight to about 50 % by weight of a resin component, preferably polyurethane, more preferably polyurethane powder, most preferred polyurethane waste powder, about 0.5 % by weight to about 10 % by weight binder or binder mixture, preferably a polyvinyl alcohol or a binder mixture comprising a polyvinyl alcohol, and the balance water. In one preferred embodiment of the invention, the coating composition for producing the release layer comprises, essentially consists of or consists of, respectively, about 5 % by weight polyurethane powder, preferably polyurethane waste powder, about 2 % by weight polyvinyl alcohol binder, and about 93 % by weight water.

After the curing step as outlined above, the final release layer may or may not contain residual liquid base component, preferably water.

In further preferred embodiments of the invention the coating composition for preparing the release layer according to a preferred embodiment as disclosed above comprises a coating component containing a mixture of non-volatile, preferably film forming ingredients and a liquid base component, preferably an aqueous base component, more preferably an aqueous base composition comprising water, optionally containing one or more volatile components. The liquid base component may also essentially consist of or consist of water. Typically, and preferably, the coating component or components, respectively, is/are dispersed in the base component, preferably an aqueous base component as mentioned before. The coating component typically comprises a resin ingredient, i.e. a polymeric material, preferably selected from the polymeric materials as outlined above (or a mixture of polymeric materials, respectively).

In a preferred embodiment this type, the coating composition (in other instances also referred to herein as "strippable coating composition") for the release layer comprises about 35 % by weight to about 75 % by weight, more preferably about 41 % by weight to about 71 % by weight of the coating component and the balance water or aqueous base component, wherein "% by weight" refers to the weight of the total coating composition. Preferably, the coating component comprises, based on the total weight of the coating composition, about 5 % by weight to about 50 % by weight resin component, preferably a polymeric material as disclosed above, and optionally one or more further ingredients such as preferably selected from release agents, wetting agents, defoamers, plasticizers, coalescents and/or other aids as outlined above.

Suitable release agents include, but are not limited to, silicon polymers, unsaturated fatty acid monoamides such as oleic acid stearate, petrolatum, sodium alkyl benzene sulfonates, synthetic waxes including low molecular weight polyethylene waxes, paraffin waxes, polymeric waxes, fatty oils, and mixtures of two or more thereof.

Typical examples of suitable wetting agents for use in the present invention are selected from surfactants. One or more surfactants can be used. Wetting agents for use in the present invention can also be used as dispersants. Anionic and/or cationic and/or nonionic surfactants may be used. The suitable surfactant or surfactant mixture, respectively, is selected according to the specific resin component(s) included in the coating composition.

Preferred anionic surfactants include, but are not limited to, metal salts of fatty acids, such as metal salts of oleic acid. Preferred metal cations for this type of anionic surfactants are selected from alkali metals, preferably sodium and potassium. Particularly preferred metal salts of fatty acids for use in the present invention are sodium oleate, potassium oleate and mixtures thereof. Further preferred anionic surfactants for use in the invention are alkylbenzene sulfonates, more preferred alkali metal salts thereof such as preferably sodium dodecylbenzene sulfonate. Other preferred anionic surfactants include sulfuric acid esters of higher alcohols such as sulfuric acid esters of fatty alcohols, preferably alkali metal salts thereof such as preferably sodium lauryl sulfate. Still further preferred anionic surfactants include sulfonic acid esters of higher alcohols such as sulfuric acid esters of fatty alcohols, preferably alkali metal salts thereof such as preferably sodium lauryl sulfonate.

Preferred anionic surfactants for use as dispersants are phosphate esters.

Preferred nonionic surfactants include, but are not limited to, polyoxyethylene alkyl aryl ethers such as polyoxyethylene nonyl phenyl ether, polyoxyethylene octyl phenyl ether, polyoxyethylene octyl phenyl ether and mixtures of two or more thereof. Nonylphenol polyethylene glycol is a particularly preferred wetting agent for use in the present invention.

Defoamers for use in the invention include, but are not limited to, various dispersions such as reacted silica in mineral oil or silicone-based materials known in the art.

Plasticizers and coalescents for use in the invention include, but are not limited to, glycerine, dibutyl phthalate, and 2,2,4-trimethyl-1,3-pentanediol monoisobutyrate.

A particularly preferred coating component included in the composition for the release layer of the invention comprises, based on the total weight of coating composition, about 41 % by weight to about 71 % by weight resin component, about 6 % by weight to about 15 % by weight of one or more release agents, about 0.1 % by weight to about 0.8 % by weight of one or more wetting agents, about 0.1 % by weight to about 0.8 % by weight of one or more defoamers and about 0.1 % by weight to about 2.5 % by weight of one or more plasticizers and/or one or more coalescents.

After the curing step as outlined above, the prepared release layer may or may not contain residual liquid base component, preferably water.

Another preferred embodiment of a coating composition based on polyurethane as coating component comprises as a first component (A) (also denoted hereinafter as "lacquer component") a dispersion comprising at least one long-chain polyol, preferably having an average molecular weight of at least about 1000 g/mol, or more than about 1000 g/mol, a release agent which may be selected from one or more of the exampled described above, preferably in an amount from about 5 to about 50 % by weight, based on the total weight of the coating composition, and, as a second component (B) (also denoted hereinafter as "hardener component"), at least one crosslinking agent having isocyanate groups.

The at least one long-chain polyol is preferably selected from polyether polyols such as polyethylene glycol (PEG) and//or polypropylene glycol (PPG). Preferred long-chain polyether polyols are selected from long-chain PEG and long chain PPG, preferably having an average molecular weight of about 1500 to about 4000, with the corresponding PPG being most preferred. Different polyols such as polyether polyols can be used in combination of two or more thereof in component (A). The mixture can comprise at least one long-chain polyol such as a long-chain polyether polyol, preferably a long-chain PPG and/or a long-chain PEG such as those outlined above, and at least one different polyol such as a short/medium- or long-chain polyol, preferably a different PEG and/or a different PPG. One preferred example of a polyol combination of the invention is a combination of PPG having an average molecular weight of about 1500 to about 4000, and PEG having an average molecular weight of about 400 to about 4000 g/mol.

Component (A) may optionally comprise a catalyst which will act to shorten the overall reaction time between the isocyanate and the isocyanate-reactive groups of the polyol when they are brought together.

Suitable examples of catalysts for use in the invention include, but are not limited to, tin-based catalyst materials such as di-butyl tin dilaurate and tin octoate; tertiary amines such as 1 ,4-diazabicyclo[2.2.2]octane (DABCO) and pentamethyldipropylenetriamine; amidine complexes of zinc(ll); zinc carboxylates; bismuth carboxylates; and ammonium salts. The amount of the catalyst present during the reaction is typically in the range of from about 0.001 % by weight to about 2 % by weight and preferably from about 0.05 % by weight to about 1.75 % by weight, based on the total weight of the coating composition.

For application, the lacquer (A) and hardener (B) components may be mixed by hand or a suitable mixing device in predetermined amounts, preferably in the weight percentages as outlined above, wherein the mixing ratio of (A) to (B) is preferably about 75 % by weight (A) and about 25 % by weight (B). It is also possible to apply suitable coating compositions, preferably polyurethane compositions, from pre-prepared component packages such as packages using 2K spraying devices commercially available from various suppliers.

It is to be understood that the disclosure of coating compositions for the release layer, in particular as regards their ingredients and components, amounts, weight percentages and weight ratios thereof, and the preparation of the compositions and their application on the insulation layer and/or the substrate also applies to the method for preparing a removable insulation composite material according to the invention as further described below.

In other preferred embodiments of the invention, the release layer comprises, essentially consists of or consists of, respectively, a textile material, preferably a woven fabric or mesh textile, more preferably a pleated mesh textile. By using a textile as release layer, the insulation layer, when the composite material of the invention is applied onto the substrate, adheres partly to the substrate, but its adherence to the substrate is restricted due to the textile to which the insulation layer is attached as well. Preferred textiles for use in the present invention include polyester textiles, preferably polyester mesh textiles, more preferably pleated polyester meshes which are commercially available e.g., from L. van Heek Textiles B.V., Losser, The Netherlands. One preferred polyester textile from this supplier is the product ZBA mesh.

For providing efficient adherence of the composite material of the invention to the substrate, the insulation layer has preferably a thickness of not more than about 50, more preferably not more than 40 cm, even more preferred not more than 30 cm, most preferred not more than 20 cm.

The composite material of the invention may, in addition to the insulation layer and release layer, further components such as further layers for providing or improving, respectively, one or more desired features of the complete composite. For example, the composite material may comprise one or more additional layers for providing the composite with colour(s) and protective features, such as preferably fire protection and/or water-repellent characteristics and/or protection against environmental conditions such as e.g., protection against chemical and/or physical environmental deterioration. Preferably, such additional layer components are applied to the surface of the insulation layer being opposite to the surface of the insulation layer on which the release layer is applied.

Preferred substrates of the invention are surface materials of buildings, in particular construction materials, which may be indoor building surfaces such as floors and/or roofs, e.g. made of wood, stone, concrete, metal, glass, natural or synthetic elastomers, or a mixture of two or more thereof. In other embodiments, the substrate is an outside part of a building such as a facade material which also may be made of or comprises, respectively, wood, stone, concrete, metal, glass, natural or synthetic elastomers, or a mixture of two or more thereof.

A further aspect of the invention is a method for preparing a removable insulation composite material on a substrate comprising the steps of:
(i) applying a release layer at least partially on the substrate; and
(ii) applying an insulation layer on the release layer;
wherein the insulation layer adheres to the release layer which provides for removable attachment of the insulation to the substrate.

The release layer in step (i) of the production method of the invention may be partially applied on the substrate. In some embodiments of the invention, the release layer may be applied to on the complete surface of the substrate.

Preferred materials and components, respectively, of the release layer, the insulation layer, and the substrate have already been elaborated above.

Step (i) of the method of the invention may be embodied in different ways.

In certain embodiments, the release layer is prepared by applying a coating composition at least partially on the substrate. Preferred coating compositions, which also apply in the context of the preparation method of the invention, ingredients and their preferred amounts have already been described above. The coating composition may be pre-prepared before application on the substrate. In other embodiments of the invention, the coating composition is prepared *in situ,* i.e. the preparation of the composition and the application process occur essentially simultaneously. A typical example of such a process is the application of a two-component system as exemplified by the above-described polyurethane coating made from components (A) (lacquer component) and (B) (hardener component) which are typically applied by 2K spray devices.

Release layers in the form of textiles are preferably applied to the substrate by pasting the textile onto the substrate using a suitable adherent such as a wallpaper glue or the like.

Preferably, polyurethane foams for use as insulation layers are applied by casting or spraying in step (ii) of the method of the invention.

As already outlined above, the insulation layer is preferably applied in a thickness of not more than about 50, more preferably not more than 40 cm, even more preferred not more than 30 cm, most preferred not more than about 20 cm.

Further subject matter of the invention is a method of recycling an insulation of a substrate comprising the step of stripping the insulation composite material as defined above from a substrate, preferably a building or construction, respectively, substrate such as a floor, roof or wall which may comprise, or essentially consist of or consist of, respectively, substrate materials as outlined above. Preferred substrate materials, insulation layer materials, and release layer materials and their components, respectively, have already been outlined above.

The present invention is hereinafter further illustrated with reference to the accompanying drawings:

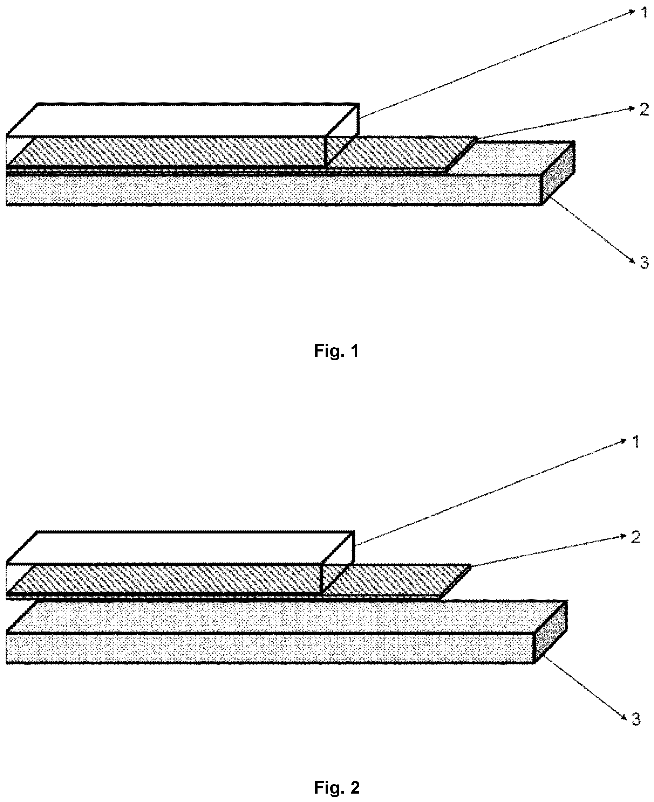

Fig. 1 shows a schematic representation of the general structure of the insulation composite material according to the invention in adherence to the substrate. The insulation composite material comprises an insulation layer 1 and a release layer 2. The release layer 2 is intermediate between substrate 3 and insulation layer 1, thus connecting the insulation layer 1 to the substrate 3. The insulation layer 1 is typically a hard/rigid polyurethane foam preferably used for thermal insulation of the substrate 3 which is typically a construction material such as wood, stone, concrete or mixture thereof. Such substrate is or forms part of, respectively, a building part such as a floor, roof or wall.
Fig. 2 is a schematic representation of the insulation composite material shown in Fig. 1 wherein the insulation composite material comprising insulation layer 1 and release layer 2 is separated from the substrate 3.

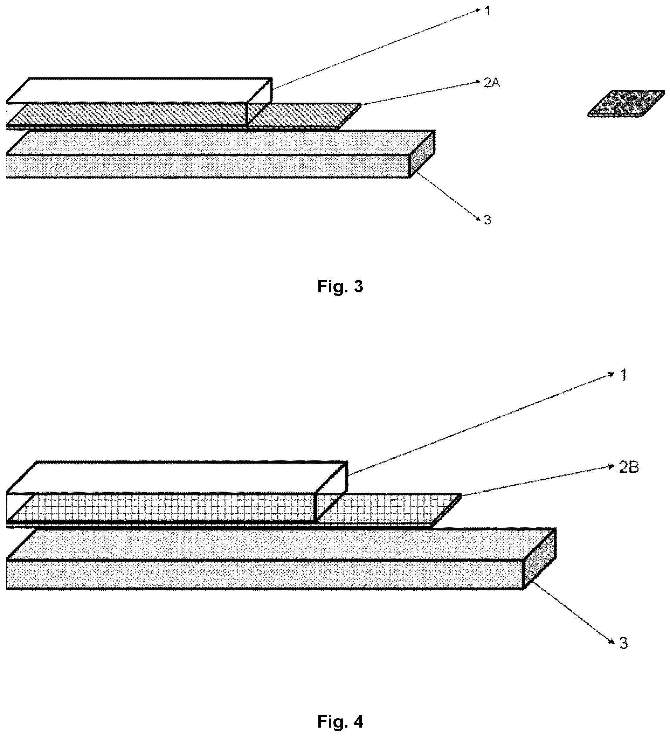

Fig. 3 is a schematic representation of a preferred embodiment of the insulation composite material according to the invention. Th release layer 2A of this embodiment is composed of a polyurethane waste powder (such as a polyurethane powder obtained from a polyurethane foam waste material) and a polyvinyl alcohol binder. The insulation composite material is applied to the substrate 3 such as an uninsulated roof section by firstly spraying a polyurethane waste powder/polyvinyl alcohol binder composition typically comprising water onto the substrate 3 followed by air drying, thus forming release layer 2A on the substrate 3. The insulation layer 1 is then sprayed or casted onto release layer 2A. The spray foam insulation layer 2 reacts and becomes adherent to the release layer 2A. The insulation composite material can be removed by grabbing with one or both hands and pulling one edge of insulation layer 1. After removal of the insulation, the substrate surface 3 such as a concrete/wooden roof remains which can then be recycled or reused. The insulation composite material of the invention or the insulation layer of the composite material of the invention may also be recycled and/or reused.
Fig. 4 is a schematic representation of an alternative preferred embodiment of the insulation composite material according to the invention. The release layer 2B of this is embodiment is a textile material. The textile release layer 2B is a mesh material, thus providing the release layer 2B with holes. The release layer is typically pasted on the substrate 3 by using an adherent such as wallpaper glue. In order to cover large substrate surface areas such as a roof section, multiple units of the textile release layer may be pasted to the substrate 3. Thereafter, the insulation layer 1 typically a hard/rigid polyurethane foam is applied by spraying or casting. After the foam has reacted the insulation composite material of this embodiment is formed on the substrate 3. Thereafter, the insulation layer can be removed from the composite and re-used. The removal of the insulation layer is typically accomplished as outlined above for the embodiment as shown in Fig. 3.

In summary, the present invention generally provides insulation composite materials comprising an insulation layer and a release layer which forms a protective strippable coating or a textile mesh on a substrate. More specifically, the release layer of the present invention is preferably an aqueous based, strippable coating which forms a temporary layer on a variety of substrates including metal, glass, concrete, natural and synthetic elastomers and various other porous, non-porous and painted substrates, and which is easily peeled or washed from the substrates.

## Claims

1. An insulation composite material comprising an insulation layer and a release layer wherein the release layer adheres to the insulation layer and provides for removable attachment of at least the insulation layer of the insulation composite material when said material is attached to a substrate material.

2. The insulation material of claim 1 wherein the insulation layer comprises or is an insulation material selected from the groups consisting of polyurethanes, stone wool, glass wool, resol rigid foam, phenolic foam, polyisocyanurate (PIR), extruded polystyrene (EPS), expanded polystyrene (XPS), ureum formaldehyde foam, cellulose fiberboard, hemp fiberboard, wood fiberboard and flax wool.

3. The insulation material of claim 2 wherein the polyurethane is a polyurethane foam.

4. The insulation material of claim 3 wherein the polyurethane foam is a polyurethane hard foam.

5. The insulation material of according to any one of the preceding claims wherein the release layer is prepared from a coating composition comprising a coating component including at least one polymeric material.

6. The insulation material of claim 5 wherein the polymeric material is selected from the group consisting of polyurethanes, polyvinyl alcohol, polyvinyl acetates, polyvinyl formal, polyvinyl butyral, polyvinyl chloride, polyvinyl acetate copolymers, polyvinylidene copolymers and polyvinylidene chloride-vinyl chloride copolymers and mixtures of two or more thereof.

7. The insulation material of claim 6 wherein the polymeric material is a polyurethane wherein the coating composition comprises as a first component (A) a dispersion comprising at least one long-chain polyol, preferably having an average molecular weight of 1000 g/mol or more, a release agent, and optionally a catalyst, and, as a second component (B) at least one crosslinking agent having isocyanate groups.

8. The insulation material of claim 7 wherein the polyol is a polypropylene glycol, preferably having an average molecular weight of from 1500 g/mol to 4000 g/mol, optionally in combination with a polyethylene glycol having an average molecular weight of from 400 to 4000 g/mol.

9. The insulation material of claim 7 or 8 wherein the amount of the release agent is 5 to 50 % by weight, based on the total weight of the coating composition.

10. The insulation material according to any one of claims 7 to 9 wherein the coating composition contains 75 % by weight component (A) and 25 % by weight component (B), based on the total weight of the coating composition.

11. The insulation material of claim 5 or 6 wherein the coating composition further comprises a liquid base material.

12. The insulation material of claim 11 wherein the liquid base material is water or an aqueous composition.

13. The insulation material of claim 11 or 12 wherein the coating component comprises at least one further ingredient selected from the group consisting of one or more release agents, one or more wetting agents, one or more defoamers, one or more plasticizers and/or one or more coalescents.

14. The insulation material according to any one of claims 11 to 13 wherein the release layer comprises a polymeric binder and a polyurethane powder, preferably a polyurethane waste powder.

15. The insulation material according to any one of claims 11 to 14 wherein the coating composition comprises, based on the total weight of the coating composition, 35 % by weight to 75 % by weight, preferably 41 % by weight to 71 % by weight of the coating component and the balance water or aqueous base component.

16. The insulation material of claim 15 wherein the coating component comprises, based on the total weight of the coating component, 41 % by weight to 71 % by weight of a polymeric resin component, 6 % by weight to 15 % by weight of one or more release agents, 0.1 % by weight to 0.8 % by weight of one or more wetting agents, 0.1 % by weight to 0.8 % by weight of one or more defoamers and 0.1 % by weight to 2.5 % by weight of one or more plasticizers and/or one or more coalescents

17. The insulation material according to any one of claims 1 to 3 wherein the release layer comprises or is a textile material.

18. . The insulation material of claim 17 wherein the textile material is a polyester mesh.

19. The insulation material according to any one of the preceding claims wherein the insulation layer has a thickness of not more than 50 cm, more preferably not more than 40 cm, even more preferred not more than 30 cm, most preferred not more than 20 cm.

20. The insulation material according to any one of the preceding claims wherein the release layer is removably attachable to the substrate.

21. The insulation material according to any one of the preceding claims wherein the substrate is a construction material.

22. The method of claim 21 wherein the construction material is selected from the group consisting of wood, stone, concrete, metal, glass, natural and synthetic elastomers.

23. A method for preparing a removable insulation composite material according to any one of the preceding claims on a substrate comprising the steps of:
(i) applying a release layer to the substrate; and
(ii) applying an insulation layer on the release layer;
wherein the insulation layer adheres to the release layer which provides for removable attachment of the insulation to the substrate.

24. The method of claim 23 wherein step (i) comprises applying a coating composition as defined in any one of claims 5 to 16 to the substrate, preferably by spray coating, and curing the coating composition, preferably by air drying.

25. The method of claim 23 or 24 wherein the insulation layer is as defined in claim 3 or 4.

26. The method of claim 25 wherein the polyurethane foam is applied by casting or spraying.

27. The method according to any one of claims 23 to 26 wherein the insulation layer is applied in a thickness of not more than 50 cm, more preferably not more than 40 cm, even more preferred not more than 30 cm, most preferred not more than 20 cm.

28. The method of claim 27 wherein the release layer is removably attachable to the substrate.

29. The method according to any one of claims 23 to 28 wherein the substrate is a construction material.

30. The method of claim 29 wherein the construction material is selected from the group consisting of wood, stone, concrete, metal, glass, natural and synthetic elastomers.

31. A method for recycling an insulation of a substrate comprising the step of stripping the insulation composite material as defined in any one of claims 1 to 22 from a substrate.

32. The method of claim 31 wherein the substrate is a construction material.

33. The method of claim 32 wherein the construction material is selected from the group consisting of wood, stone, concrete, metal, glass, natural and synthetic elastomers.
